# EUROPÄISCHE PATENTSCHRIFT

(11) **EP 2 342 088 B1**
(45) Veröffentlichungstag und Bekanntmachung des Hinweises auf die Patenterteilung: **22.01.2014**
(21) Anmeldenummer: 09783227.3
(22) Anmeldetag: 21.09.2009
(51) Int. Cl.: C08K 3/00, C08K 5/00, C08K 5/372, C08K 5/42, C08K 5/549, B60C 1/00, C08K 5/36

(54) **KAUTSCHUKMISCHUNG FÜR REIFEN MIT VERBESSERTEM VULKANISATIONSMITTEL**
RUBBER MIXTURE FOR TIRES, COMPRISING AN IMPROVED VULCANIZING INGREDIENT
MÉLANGE DE CAOUTCHOUC POUR PNEUMATIQUES AVEC AGENT DE VULCANISATION AMÉLIORÉ

(30) Priorität: 30.10.2008 US 290427
(43) Veröffentlichungstag der Anmeldung: 13.07.2011
(73) Patentinhaber: Continental Reifen Deutschland GmbH, 30165 Hannover (DE)
(72) Erfinder: RECKER, Carla, 30167 Hannover (DE); KRAMER, Thomas, 31832 Springe (DE); HERZOG, Katharina, 31177 Harsum (DE); MERGELL, Boris, 30890 Barsinghausen (DE); YORK, William, Michael, New Fairfield Connecticut - CT 06812 (US); CRUSE, Richard, W., Yorktown Heights New York 10598 (US)
(74) Vertreter: Finger, Karsten
(86) Internationale Anmeldenummer: PCT/EP2009/062179
(87) Internationale Veröffentlichungsnummer: WO 2010/049216

(56) Entgegenhaltungen:
- US-A1- 2008 161 452
- US-A1- 2008 161 460
- US-A1- 2008 161 462
- US-A1- 2008 161 475
- US-A1- 2008 161 486
- US-B1- 6 359 046

## Beschreibung

Die Erfindung betrifft eine Kautschukmischung, insbesondere für Reifen, mit verbessertem Abrieb und verbesserter Ermüdungsbeständigkeit.

Eine sehr große Auswahl an Additiven wird den Mischungen beigemischt, um die Eigenschaften der Mischungen und des Vulkanisats zu beeinflussen, und/oder es werden spezifische Polymere zu diesem Zweck verwendet. Beispiele für Additive, die hier genannt werden können, sind Füllstoffe (z. B. Ruß), Weichmacher, Antioxidationsmittel und Vernetzungssysteme, die aus Schwefel, Beschleunigern und Aktivatoren bestehen. Wird jedoch durch das Variieren der Mischung eine Eigenschaft verbessert, geht dies häufig mit der Beeinträchtigung einer anderen Eigenschaft einher, und es gibt daher gewisse Zielkonflikte. Beispiele für diese Zielkonflikte bei Mischungen für Reifenlaufflächen sind in Verbindung mit Abriebleistung, Ermüdungsbeständigkeit und erhöhtem Wärmeaufbau zu finden, was zu einer schlechteren Rückprallelastizität und daher schlechterem Rollwiderstand führt. Ein besonderes Verfahren, das verwendet wird, um diese Zielkonflikte zu lösen, ist das Variieren der Beschaffenheit der Mischung und insbesondere auch Änderungen oder Modifikationen bei Additiven, wobei angestrebt wird, ein verbessertes Niveau der Eigenschaften zu erreichen, die normalerweise entgegengesetzt korreliert sind.

Eine wichtige Gruppe von Additiven, die die Vulkanisationsgeschwindigkeit und die physikalischen Eigenschaften der Vulkanisate beeinflussen, ist die Gruppe der Vulkanisationsbeschleuniger. Es gibt verschiedene Gruppen von Vulkanisationsbeschleunigern, die für die Produktion von Reifen erhältlich und der fachkundigen Person bekannt sind, und diese können auch in Kombination miteinander verwendet werden, wobei sich manchmal Synergieeffekte ergeben.

Diese Vulkanisationsbeschleuniger dienen der Aktivierung des Schwefels, der als Vulkanisationsmittel verwendet wird. Die Zugabe von Schwefel und Vulkanisationsbeschleuniger wird hier individuell an die zu erreichenden Eigenschaften der Reifenkautschukmischung angepasst. Diese zu erreichenden Eigenschaften sind abhängig von dem Netzwerk, das während der Vulkanisation produziert wird, z. B. zwischen den Polymerketten selbst oder Polymeren und Füllstoffen, und daher kann Art und Grad der Vernetzung im Hinblick auf die physikalischen Eigenschaften der Vulkanisate große Bedeutung beigemessen werden.

Von spezieller Bedeutung ist die Struktur der Vernetzung, die der fachkundigen Person gut bekannt ist. Die Schwefelkettenverteilung beeinflusst das Ermüdungsverhalten.

Der Stand der Technik in Verbindung mit Vulkanisationssystemen oder Vernetzungssystemen wird nun unter Verwendung der folgenden Publikationen ausführlicher beschrieben:
(D1) DE 603 03 203 T2
(D2) US 5,342,900
(D3) US 2002/0058760A1
(D4) EP 0 530 590 B1
(D2) US 7,189,866

D1 offenbart ein Polysulfidsiloxan, das als Vernetzungsmittel verwendet werden kann, und das Verfahren zu dessen Herstellung. Das Vernetzungssystem enthält hier das beschriebene Polysulfidsiloxan und mindestens einen primären Vulkanisationsbeschleuniger. Das Polysulfidsiloxan wird in einer Zusammensetzung verwendet, die auf einem Dienelastomer und auf einem verstärkenden Füllstoff basiert. Das hier beschriebene Dienelastomer enthält mehrere Komponenten und die hier beschriebenen Füllstoffe umfassen insbesondere Silika und Ruß, und jedes der hier offenbarten Beispiele bezieht sich auf eine Kautschukmischung, die aus Naturkautschuk als einzigem Polymer und Ruß als einzigem Füllstoff besteht.

D2 offenbart einen vulkanisierten Dienkautschuk, wobei die Vulkanisation in Gegenwart eines Vernetzers durchgeführt wird, der Benzylgruppen, Schwefel und Mercaptobeschleuniger und einen Sulfenamidbeschleuniger enthält.

D3 offenbart ein Formgebungsverfahren für Schutzausrüstung, insbesondere eines, das in der Lage ist, eine Plastikplatte und ein Schaumteil eines Teils einer Schutzausrüstung ausreichend zu verbinden und beide gleichzeitig ohne jede adhäsive Peripherie in Form zu bringen.

D4 offenbart ein Verfahren zur Produktion von Dienkautschukvulkanisaten mit einer sehr hohen Alterungsbeständigkeit und Reversionsbeständigkeit. Die Dienkautschukvulkanisate umfassen hier 1 bis 2,5 Teile eines Mercaptobeschleunigers oder 0,2 bis 0,8 Teile eines Sulfenamidbeschleunigers oder 0,3 bis 2,5 Teile eines Mercaptobeschleunigers und 0,1 bis 0,8 Teile eines Sulfenamidbeschleunigers. 0,1 bis 0,2 Teile Schwefel je 100 Teile Kautschuk, bevorzugt eines ölverstreckten Dienkautschuks, werden ebenfalls verwendet.

D5 bezieht sich auf Vernetzungsmittel, die zum Vernetzen von Elastomemetzwerken verwendbar sind, insbesondere bei der Fertigung von Reifen oder Halbfertigfabrikaten für Reifen. In den Beispielen wird das Verfahren mit dem cyclischem polysulfurierten Tetramethyldisiloxan durchgeführt. Dieses Verfahren zeigt, dass es möglich ist, eine Kautschukzusammensetzung ohne die Zugabe von Schwefel zu vernetzen. Außerdem wird eine Verbesserung bei der thermischen Stabilität (Reversionsverhalten) der Zusammensetzungen, die auf dem Polysulfid basieren, nachgewiesen.

Elementarer Schwefel wird üblicherweise als ein Vulkanisationsmittel für ungesättigte organische Polymere verwendet. Die Vernetzungsstellen, die der Schwefel mit dem organischen Polymer bildet, sind primär Polysulfidvernetzungsstellen, die die thermische Stabilität der Vulkanisate reduzieren. Die Verwendung organischer Verbindungen, die Schwefel enthaltende reaktive Gruppen haben, ist der fachkundigen Person als Vulkanisationsmittel für Dienkautschuke bekannt. Diese Schwefel-enthaltenden Verbindungen enthalten häufig nur zwei Dithiocarbamat- oder Natriumthiosulphonatgruppen, die chemisch an eine brückenbildende Gruppe gebunden sind. Die geringe Anzahl an Verbindungspunkten ist beim Vernetzen der ungesättigten Dienpolymere ineffektiv und erzielt Vulkanisate mit einem guten Gleichgewicht von Abrieb- und Reißfestigkeit. Es wäre wünschenswert, eine neue Art von Vernetzer für Elastomere zu haben, der Ermüdungs-, Abrieb- und Reißeigenschaften, speziell Reiß- und Abriebverhalten, verbessert und dabei gleichzeitig die Härte erhält.

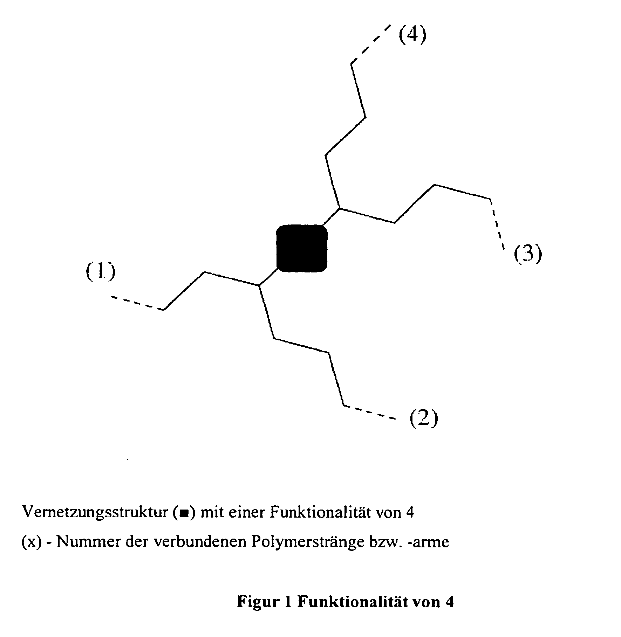

Üblicherweise werden Kautschukmischungen mit Vernetzern vulkanisiert, die zwei Verbindungspunkte bereitstellen, die theoretisch eine Vernetzungsfunktionalität von 4 aufweisen, was bedeutet, dass 4 Polymerarme mit der Vernetzungsstelle verknüpft sind, siehe Figur 1. In dem Verfahren liegt die Vernetzungsdichte in einer vernetzen Kautschukmischung ungefähr zwischen 10·10⁻⁵ bis 25·10⁻⁵ mol/cm³ (Bestimmung durch Gleichgewichtsquellung in ungefüllten Kautschukverbindungen).

Es ist eine Aufgabe der vorliegenden Erfindung, eine Kautschukmischung für Reifen, bereitzustellen, die die oben genannten Zielkonflikte löst oder mindestens abmildert. Im Wesentlichen sollen Abriebsverhalten und die Reißenergie von Kautschukmischungen für Reifen, verbessert werden und die weiteren Kautschukmischungseigenschaften auf einem ähnlichen Niveau verbleiben.

Die Begriffe Kautschukmischung für Reifen, Reifenmischung oder Reifenzusammensetzung werden in dieser Schrift synonym verwendet. Wird der Begriff Kautschukmischung alleine verwendet, so bezieht er sich, wenn nicht anders erkenntlich gemacht, auf Reifen.

Die oben genannte Aufgabe wird gelöst, indem eine Reifenzusammensetzung mit der folgenden Zusammensetzung bereitgestellt wird:
Reifenzusammensetzung mit einer Shore-A-Härte gemäß DIN 53 505 und ASTM D2240 von nicht weniger als 40 ShA und nicht mehr als 95 ShA und einer Glasübergangstemperatur Tg (E"max) gemäß DIN 53 513 bei einem spezifizierten Temperatursweep von -80 °C bis +80 °C und einer spezifizierten Kompression von 10 + 0,2 % bei 10 Hz, von nicht weniger als -80 °C und nicht mehr als 0 °C, wobei die Zusammensetzung enthält:
   - mindestens einen vulkanisierbaren Dienkautschuk, ausgewählt aus Naturkautschuken, synthetischen Polyisoprenkautschuken, Polyisobutylenkautschuken, Polybutadienkautschuken und Styrol-Butadien-Kautschuken;
   - 35 bis 300 phr mindestens eines aktiven Füllstoffs, ausgewählt aus Rußen, Silikas, siliciumbasierten Füllstoffen und Metalloxiden, von denen mindestens 10 phr Ruß, Silika oder eine Kombination davon sein muss;
   - 0 bis 250 phr anderer oder weiterer Additive;
   - 0,1·10⁻³ bis 42·10⁻³ mhr eines Vulkanisationsmittels, das mit einer Funktionalität größer 4 vernetzt; und
   - 0,1 bis 20 phr mindestens eines Vulkanisationsbeschleunigers.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die in dieser Schrift verwendete Angabe mhr (**m**ol per **h**undred parts of **r**ubber) ist dabei eine weitere Mengenangabe für Mischungsrezepturen bezogen auf mol. Die Dosierung der Molanteile der einzelnen Substanzen wird dabei stets auf 100 Gewichtsteile der gesamten Masse aller in der Mischung vorhandenen Kautschuke bezogen.

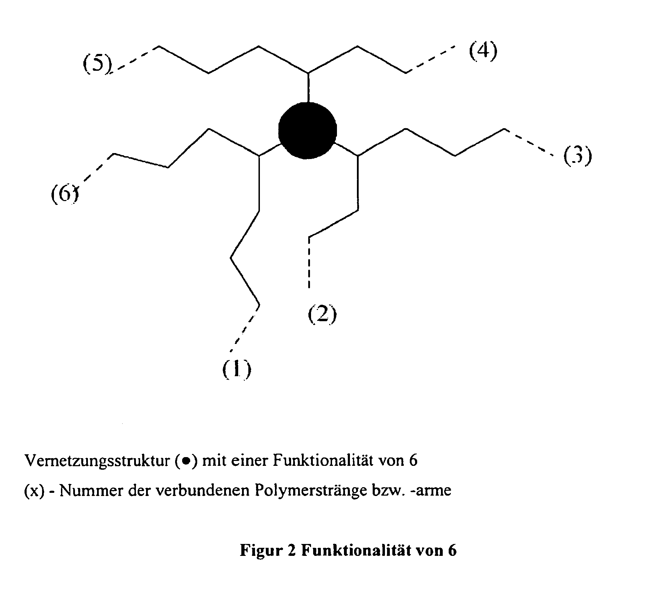

Es wird ein Vulkanisationsmittel bereitgestellt, das eine Funktionalität von mehr als 4 aufweist. Wenn die Funktionalität z. B. 6 beträgt, siehe Figur 2, werden drei Vernetzungsstellen je Molekül in der Polymermatrix eingeführt, gegenüber zwei Vernetzungsstellen, d.h. einer Funktionalität von vier, welche im derzeitigen Stand der Technik zu finden sind. Die neu gebildeten Vernetzungszentren verhindern Risswachstum und die Flexibilität dieser Zentren absorbiert Energie, um dem Reißen der Kautschukmischung vorzubeugen. Das erfindungsgemäße Vulkanisationsmittel wird im Folgenden auch als Vernetzungsmittel bezeichnet.

Als ein Beispiel löst die vorliegende Erfindung das vorgenannte Problem auf die folgende Weise. Es werden Vernetzungsstrukturen in die Kautschukmischung eingefügt, die eine höhere Funktionalität haben, als aus dem Stand der Technik bekannt. Hierbei ist zu beachten, dass zum Beispiel drei herkömmliche Vernetzungsstellen, die eine Funktionalität von vier bereitstellen, gegenüber zwei Vernetzungsstellen, die in der Kautschukmischung eine Funktionalität von sechs bereitstellen, zur gleichen Steifigkeit und analytischen Vernetzungsdichte führen. Bei einer vollständigen Insertion in eine Kautschukmischung werden zum Beispiel ungefähr 6,6·10⁻⁵ bis 18·10⁻⁵ mol/cm³ Vernetzungsstellen mit einer Funktionalität von sechs eingefügt.

Die zentral strukturierte Einheit kann auch aus gebundenen Elementen oder Elementen jeder anderen chemischen Natur, wie Kohlenwasserstoffen (z. B. Siloxan) bestehen. Bereits das teilweise Einfügen von höherfunktionalen Elementen führt zu dem oben beschriebenen erwünschten Effekt.

Die Vorteile der Erfindung beinhalten:
1. Bindungen an 3 vs. 2 Punkten;
2. Hat eine flexible Kemstruktur; und
3. Stellt ein zweites Netzwerk von Vernetzungen in der Polymermatrix bereit.

Ein anderes technisches Problem, das mit der vorliegenden Erfindung gelöst wird, besteht darin, die dynamische Stabilität/Haltbarkeit von Kautschukmischungen zu verbessern, die in einer verbesserten Reifenhaltbarkeit und verbessertem Reifenabrieb resultieren, zum Beispiel in Bezug auf verbesserte Reißenergie (HSTE-Werte).

Die Vorteile der vorliegenden Erfindung und ihre technischen Merkmale zeigen sich in der Produktion von Reifen mit verbesserter Laufflächenhaltbarkeit, zum Beispiel besserem Verhalten gegenüber dem bekannten so genannten Chipping and Chunking. Bei Anwendung in Body-Mischungen, d.h. für Mischungen, die in den inneren Reifenbauteilen und nicht im Laufstreifen verwendet werden, werden eine bessere Haltbarkeit und eine bessere Ermüdungsbeständigkeit erreicht.

Bevorzugt enthält das Vulkanisationsmittel Strukturen chemischer Natur von Kohlenwasserstoffen oder Siloxanen.

Besonders bevorzugt enthält das Vulkanisationsmittel eine Schwefel-enthaltende Struktur der allgemeinen Formel:

G[CₐH₂ₐ-CH₂-SₓY]ₙ

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe; und wobei a, x und n ganze Zahlen sind, für die unabhängig gilt: a gleich 0 bis 6; x gleich 0 bis 8; und n gleich 3 bis 5.

Bevorzugt enthält das Vulkanisationsmittel eine Schwefel-enthaltende cyclische Struktur der allgemeinen Formel:

G[CₐH₂ₐ-CH₂-SₓY]ₙ

wobei G eine polyvalente cyclische Hydrocarbylengruppe und/oder eine polyvalente cyclische Heterokohlenwasserstoffgruppe und/oder eine polyvalente cyclische Siloxangruppe ist, die 1 bis 30 Atome in der cyclischen Struktur enthält; wobei jedes Y unabhängig ausgewählt ist aus einer kautschukaktiven Gruppe, die Schwefel-enthaltende Funktionalitäten enthält; und wobei a, x und n ganze Zahlen sind, für die unabhängig gilt: a gleich 0 bis 6; x gleich 0 bis 8; und n gleich 3 bis 5.
In einer bevorzugten Ausführungsform ist G eine polyvalente cyclische Hydrocarbylengruppe, die 5 bis 7 Kohlenstoffatome enthält und jedes Y ist unabhängig ausgewählt aus einer kautschukaktiven Gruppe, die Schwefel-enthaltende Funktionalitäten enthält und a, x und n ganze Zahlen sind, für die unabhängig gilt: a gleich 0 bis 6; x gleich 0 bis 8; und n gleich 3 bis 5.

Besonders bevorzugt enthält das Vulkanisationsmittel einen Schwefel-enthaltenden cyclischen aliphatischen Kohlenwasserstoff der allgemeinen Formel:

G[CₐH₂ₐ-CH₂-SₓY]ₙ

wobei G eine polyvalente cyclische Hydrocarbylengruppe ist, die 5 bis 7 Kohlenstoffatome enthält; jedes Y unabhängig ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe); und a, x und n ganze Zahlen sind, für die unabhängig gilt: a gleich 0 bis 6; x gleich 0 bis 8; und n gleich 3 bis 5.
In einer besonders bevorzugten Ausführungsform ist Y unabhängig ausgewählt aus einer Thiosulfonatgruppe oder einer Dithiocarbamatgruppe.

In einer bevorzugten Ausführungsform enthält das Vulkanisationsmittel der Reifenzusammensetzung eine vernetzte Polysulfid-enthaltende cycloaliphatische Verbindung mit der allgemeinen Formel:

[(CₐH₂ₐ-)ₘG¹(-C_{b}H_{2b}Sₓ-)ₙ₋ₘ]ₒ[C_{c}H_{2c}-G²-C_{d}H_{2d}S_{y-}]ₚ[R]_{q}

wobei G¹ eine gesättigte, monocyclische aliphatische Gruppe mit Valenz n ist, die 5 bis 12 Kohlenstoffatome enthält und optional mindestens ein Halogen enthält; G² eine gesättigte, divalente cyclische aliphatische Gruppe mit Valenz 2 ist, die 5 bis 12 Kohlenstoffatome enthält und optional mindestens ein Halogen enthält; jedes R unabhängig ausgewählt ist aus der Gruppe, bestehend aus einem Wasserstoff, einem monovalenten Kohlenwasserstoff mit bis zu 20 Kohlenstoffatomen und einem Halogenatom; jedes a, b, c, d, m, n, o, p, q, x und y unabhängig eine ganze Zahl ist, wobei gilt: a gleich 2 bis 6; b gleich 2 bis 6; c gleich 1 bis 6; d gleich 1 bis 6; m gleich 1 oder 2; n gleich 3 bis 5; o gleich einer positiven ganzen Zahl, p gleich 0 oder einer positiven ganzen Zahl; q gleich einer positiven ganzen Zahl; x gleich 1 bis 10 und y gleich 1 bis 10, unter der Bedingung, dass
(i) mindestens ein x gleich 2 bis 10 ist;
(ii) das Verhältnis von p zu o kleiner als 1 bis 5 ist; und
(iii) q gleich der Summe der offenen Valenzen der Gruppen (CₐH₂ₐ-)ₘG¹(-C_{b}H_{2b}Sₓ-)ₙ₋ₘ und C_{c}H_{2c}-G²-C_{d}H_{2d}S_{y}- ist.

Eine andere bevorzugte Ausführungsform existiert, wenn das Vulkanisationsmittel eine Schwefel-enthaltende Struktur der folgenden allgemeinen Formel oder Mischungen davon enthält: 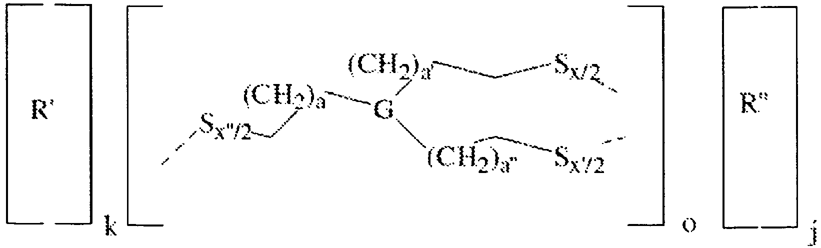 oder 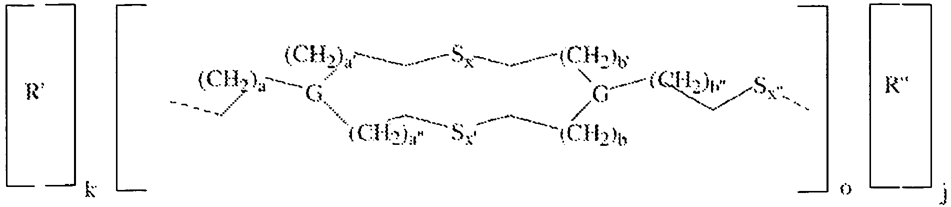 oder 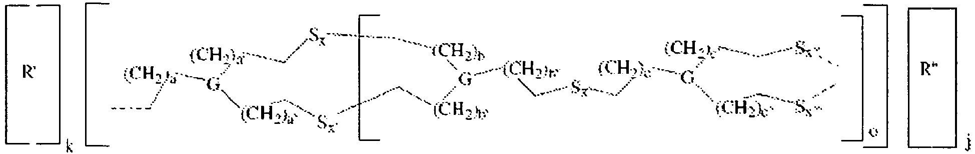 oder 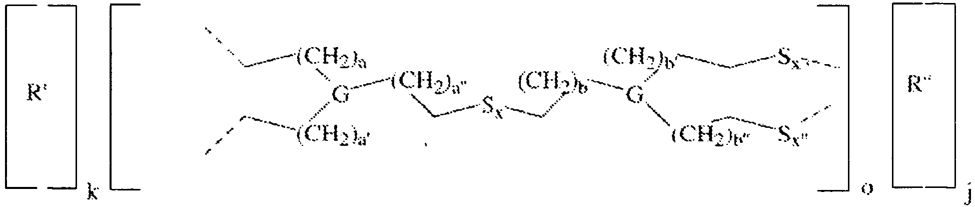 wobei G ein polyvalenter Kohlenwasserstoff und/oder ein Heterokohlenwasserstoff und/oder eine Siloxangruppe ist, die 1 bis 100 Atome enthält; und jedes a, a', a", b, b', b", c, c', c", k, j, o, x, x' x", x"' und x"" ganze Zahlen sind, für die unabhängig gilt: a, a', a", b, b', b", c, c', c" gleich 0 bis 8; o, k, j gleich positiven ganzen Zahlen; und x, x', x", x"', x"" gleich 2 bis 8; wobei jedes R', R" unabhängig ausgewählt ist aus der Gruppe, bestehend aus einem Wasserstoffatom, einem monovalenten Kohlenwasserstoff mit bis zu 20 Kohlenstoffatomen und einem Halogenatom.

In einer bevorzugten Ausführungsform ist G eine cyclische polyvalente Kohlenwasserstoff- und/oder Heterokohlenwasserstoff- und/oder Siloxangruppe, die 1 bis 30 Atome in einer cyclischen Struktur enthält; und jedes a, a', a", b, b', b", c, c', c", k, j, o, x, x' x", x"' und x"" ganze Zahlen sind, für die unabhängig gilt: a, a', a", b, b', b", c, c', c" gleich 0 bis 8; o, k, j gleich positiven ganzen Zahlen; und x, x', x", x"', x"" gleich 2 bis 8; wobei jedes R', R" unabhängig ausgewählt ist aus der Gruppe, bestehend aus einem Wasserstoffatom, einem monovalenten Kohlenwasserstoff mit bis zu 20 Kohlenstoffatomen und einem Halogenatom.

In einer besonders bevorzugten Ausführungsform ist G eine polyvalente cyclische Hydrocarbylengruppe, die 5 bis 7 Kohlenstoffatome enthält; und jedes a, a', a", b, b', b", c, c', c", k, j, o, x, x' x", x"' und x"" ganze Zahlen sind, für die unabhängig gilt: a, a', a", b, b', b", c, c', c" gleich 0 bis 8; o, k, j gleich positiven ganzen Zahlen; und x, x', x", x"', x"" gleich 2 bis 8; wobei jedes R', R" unabhängig ausgewählt ist aus der Gruppe, bestehend aus einem Wasserstoffatom, einem monovalenten Kohlenwasserstoff mit bis zu 20 Kohlenstoffatomen und einem Halogenatom.

Bevorzugt enthält das Vulkanisationsmittel 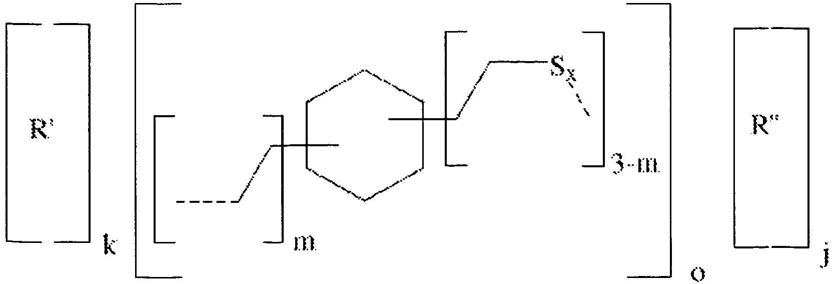 wobei jedes n, o, k, j und x ganze Zahlen sind, für die unabhängig gilt: m gleich 0 bis 2; o, k, j gleich positiven ganzen Zahlen; und x gleich 2 bis 8; wobei jedes R', R" unabhängig ausgewählt ist aus der Gruppe, bestehend aus einem Wasserstoffatom, einem monovalenten Kohlenwasserstoff mit bis zu 20 Kohlenstoffatomen und einem Halogenatom.

Bevorzugt enthält das Vulkanisationsmittel 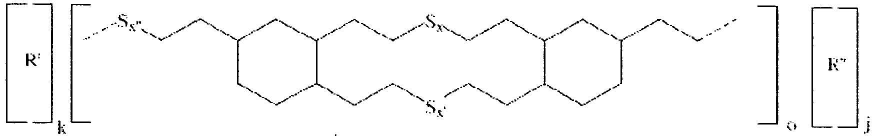 wobei jedes k, o, j, x, x' und x" ganze Zahlen sind, für die unabhängig gilt: x, x', x" gleich 2 bis 8; o, k und j gleich positiven ganzen Zahlen; wobei jedes R', R" unabhängig ausgewählt ist aus der Gruppe, bestehend aus einem Wasserstoffatom, einem monovalenten Kohlenwasserstoff mit bis zu 20 Kohlenstoffatomen und einem Halogenatom.

Das Vulkanisationsmittel enthält 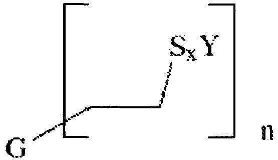 wobei G eine cyclische Struktur ist und jedes Y unabhängig ausgewählt ist aus einer kautschukaktiven Gruppe; und jedes x und n ganze Zahlen sind, für die unabhängig gilt: x gleich 0 bis 8 und n gleich 3 bis 8.

Besonders bevorzugt enthält das Vulkanisationsmittel 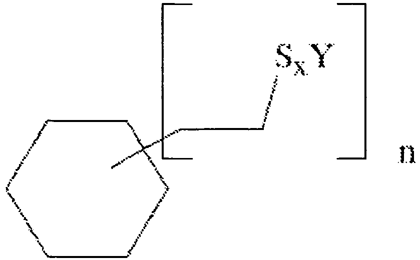 wobei jedes Y unabhängig ausgewählt ist aus einer kautschukaktiven Gruppe; und jedes x und n ganze Zahlen sind, für die unabhängig gilt: x gleich 0 bis 8 und n gleich 3 bis 6. In einer bevorzugten Ausführungsform ist die kautschukaktive Gruppe eine kautschukaktive Gruppe, die Schwefel enthaltende Funktionalitäten enthält. Diese kautschukaktive Gruppe, die Schwefel enthaltende Funktionalitäten enthält, kann ausgewählt werden aus einer Thiosulfonatgruppe, einer Dithiocarbamatgruppe, einer Thiocarbonylgruppe, einer Wasserstoffgruppe und einer Kohlenwasserstoffgruppe, ist aber nicht auf diese beschränkt, wenngleich eine Dithiocarbamatgruppe oder eine Thiosulfonatgruppe besonders bevorzugt sind.

Es ist bevorzugt, wenn das Vulkanisationsmittel 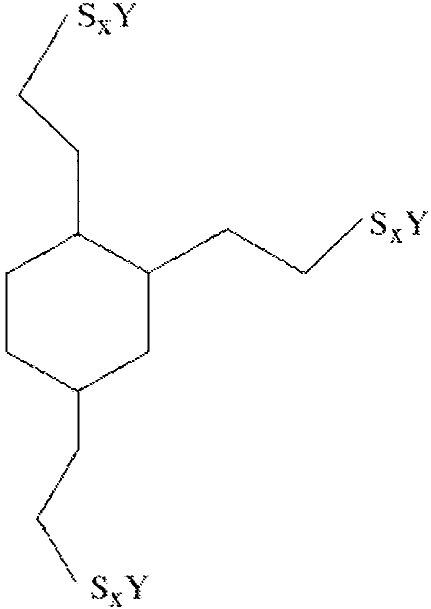 enthält, wobei jedes Y unabhängig ausgewählt ist aus einer kautschukaktiven Gruppe; und jedes x ganze Zahlen sind, für die unabhängig gilt: x gleich 0 bis 8.

Bevorzugt enthält das Vulkanisationsmittel 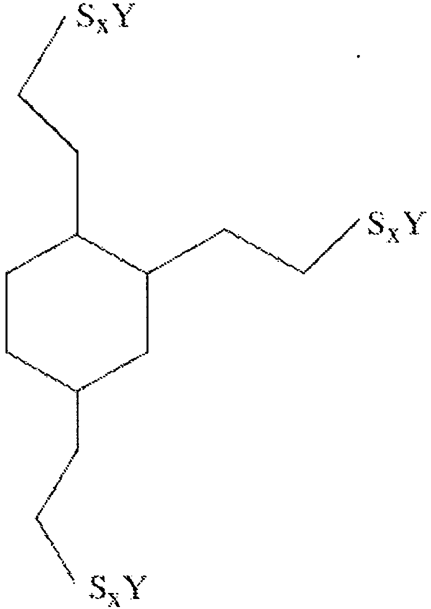 wobei jedes Y unabhängig ausgewählt ist aus einer kautschukaktiven Gruppe, die Schwefel-enthaltende Funktionalitäten enthält; und jedes x ganze Zahlen sind, für die unabhängig gilt: x gleich 0 bis 8.
Die Schwefel enthaltende kautschukaktive Gruppe Y wird bevorzugt ausgewählt aus einer Thiosulfonatgruppe, einer Dithiocarbamatgruppe, einer Thiocarbonylgruppe, einer Wasserstoffgruppe und einer Kohlenwasserstoffgruppe, ist aber nicht auf diese beschränkt, wenngleich die Dithiocarbamatgruppe oder die Thiosulfonatgruppe besonders bevorzugt sind.

Der fachkundigen Person sind die Verfahren zum Herstellen des Vulkanisationsmittel bekannt.

Dennoch werden im Folgenden einige Verfahren kurz zusammengefasst, obwohl es andere Verfahren gibt, mit denen das Vulkanisationsmittel hergestellt werden kann:
Das Verfahren zum Herstellen eines Polysulfid-enthaltenden cycloaliphatischen Vulkanisationsmittel enthält die folgenden Schritte:
   a) Umsetzen eines Polyalkenyl-substituierten Cycloalkans mit Thiosäure in Gegenwart einer Quelle freier Radikale, um ein Polythiocarboxylatsubstituiertes Alkylcycloalkan bereitzustellen;
   b) Umsetzen eines Polythiocarboxylat-substituierten Alkylcylcoalkans mit einem Deblockierungsmittel, um freies Polymercaptan-funktionelles Alkylcycloalkans zu bilden;
   c) Umsetzen des freien Polymercaptan-funktionellen Alkylcycloalkans mit einem Oxidationsmittel, ausgewählt aus einer halogenierten Schwefel-enthaltenden Verbindung, für die die allgemeine Formel:

      X¹S_{z}X²

      steht, wobei X¹ gleich einem Chlor-, Brom- oder Iodatom ist, X² gleich X¹ ist, Wasserstoff oder ein Kohlenwasserstoff mit bis zu 12 Kohlenstoffatomen, und z unabhängig eine ganze Zahl ist, wobei z gleich 1 bis 10 ist; Peroxide; Hydroperoxide; und Sauerstoff,
um ein vernetztes Polysulfid-enthaltendes cycloaliphatisches Vulkanisationsmittel bereitzustellen.

Ein Mercaptan-enthaltendes cycloaliphatisches Vulkanisationsmittel wird durch das Verfahren hergestellt, das folgende Schritte enthält:
a) Umsetzen eines Polyalkenyl-substituierten Cycloalkans mit Thiosäure in Gegenwart einer Quelle freier Radikale, um ein Polythiocarboxylatsubstituiertes Alkylcycloalkan bereitzustellen; und
b) Umsetzen eines Polythiocarboxylat-substituierten Alkylcylcoalkans mit einem Deblockierungsmittel, um freies Polymercaptan-funktionelles Alkylcycloalkan zu bilden.

Ein anderes Verfahren zum Herstellen eines Schwefel-enthaltenden cycloaliphatischen Vulkanisationsmittels enthält die folgenden Schritte:
a) Umsetzen eines Polyalkenyl-substituierten Cycloalkans mit Thiosäure in Gegenwart einer Quelle freier Radikale, um ein Polythiocarboxylatsubstituiertes Alkylcycloalkan bereitzustellen;
b) Umsetzen eines Polythiocarboxylat-substituierten Alkylcylcoalkans mit einem Deblockierungsmittel, um freies Polymercaptan-funktionelles Alkylcycloalkan zu bilden;
c) Umsetzen eines freien Polymercaptan-funktionellen Alkylcycloalkans mit einem Halogenierungsmittel, um ein Polysulfenylhalid-funktionelles Cycloalkan bereitzustellen; und,
d) Umsetzen eines Polysulfenylhalid-funktionellen Alkylcycloalkans mit einem Alkalimetallsalz, für das die Formel R-S(=O)_{b}-M⁺ steht, wobei R ein monovalenter Kohlenwasserstoff mit bis zu 20 Kohlenstoffatomen ist; M⁺ ein Alkalimetallkation ist; und b eine ganze Zahl 1 oder 2 ist, um die Schwefel-enthaltende cycloaliphatische Verbindung zu ergeben;
oder
d) Umsetzen eines Polysulfenylhalid-funktionellen Alkylcycloalkans mit einem Alkalimetallsalz, für das die Formel R₂NC(=S)S-M⁺ steht, wobei R ein monovalenter Kohlenwasserstoff mit bis zu 20 Kohlenstoffatomen ist; M⁺ ein Alkalimetallkation ist, um die Thiocarbamoyldisulfanyl-funktionelle cycloaliphatische Verbindung zu ergeben;
Reifenzusammensetzung bedeutet eine Zusammensetzung, die zumindest einen vulkanisierbaren Kautschuk enthält, ausgewählt aus Naturkautschuken (NR), synthetischen Polyisoprenkautschuken (IR), Polyisobutylenkautschuken (PIB), Polybutadienkautschuken (BR) und Styrol-Butadien-Kautschuken (SBR, S-SBR, E-SBR) und die aktive Füllstoffe enthält, ausgewählt aus Rußen, Silikas, Siliziumbasierten Füllstoffen und Metalloxiden, die zusammen in einer Menge von mindestens 35 phr vorhanden sind, wobei mindestens 10 phr Ruße, Silikas oder Kombinationen davon sein müssen. Diese Zusammensetzungen haben eine Shore-A-Härte gemäß DIN 53 505 und ASTM D2240 von nicht weniger als 40 ShA und nicht mehr als 95 ShA und eine Glasübergangstemperatur Tg (E"max) gemäß DIN 53 513 bei einem spezifizierten Temperatursweep von -80 °C bis +80 °C und einer spezifizierten Kompression von 10 + 0,2 % bei 10 Hz, von nicht weniger als -80 °C nicht mehr als 0 °C.
Diese Zusammensetzungen werden bevorzugt zum Bauen und Entwickeln von Reifenkomponenten und/oder Reifen verwendet.

Bevorzugt enthält die Reifenzusammensetzung 30 bis 100 phr mindestens eines Dienkautschuks.
Für Pkw-Laufflächen gilt z. Bsp. bevorzugt: SBR / BR: 0 - 50 phr;
NR: 0 - 50 phr, bevorzugt 0 - 30 phr,
besonders bevorzugt 0 - 20 phr;

Mindestens ein Dienkautschuk wurde aus der Gruppe, bestehend aus natürlichem Polyisopren und/oder synthetischem Polyisopren und/oder Polybutadien und/oder Styrol-Butadien-Copolymer und/oder lösungspolymerisiertem Styrol-Butadien-Copolymer und/oder emulsionspolymerisiertem Styrol-Butadien-Copolymer und/oder Butadien-Isopren-Copolymer und/oder Styrol-Isopren-Butadien-Terpolymer und/oder Butylkautschuk und/oder Halobutylkautschuk ausgewählt. Die Polymere können nicht funktionalisiert oder funktionalisiert sein, auch Mischungen aus funktionalisierten und nicht funktionalisierten Polymeren sind möglich.

Unterschiedliche Anwendungen bei Reifen (LaufflächeBody, Pkw-/Lkw-Reifen) sind mit unterschiedlichen bevorzugten Polymerzusammensetzungen verbunden:

### - Lauffläche für Pkw:

Die Reifenzusammensetzung enthält bevorzugt mindestens einen Styrol-Butadien-Kautschuk (SBR, bevorzugt einen lösungspolymerisierten Styrol-Butadien-Kautschuk (SSBR).

### Lauffläche für Lkw:

- Die Reifenzusammensetzung enthält bevorzugt 40 bis 100 phr Naturkautschuk, 0 bis 50 phr Butadienkautschuk, 0 bis 60 phr SBR, bevorzugt lösungspolymerisierten-SBR (SSBR).

### Body:

- Die Reifenzusammensetzung enthält bevorzugt 20 bis 100 phr Naturkautschuk, 0 bis 80 phr Butadienkautschuk, 0 bis 50 phr SBR.

Die Reifenzusammensetzung der Erfindung enthält ferner zusätzliche Merkmale: wobei Füllstoffe Silika, andere Metalloxide, Metallsalze (wie z. B. Carbonate, Sulfate usw.) Mikrogele oder Ruß umfassen;
Der Begriff Silika wird hierbei synonym mit Kieselsäure, Fällungskiesesläure oder amorpher Kieselsäure, wie sie in der Kautschukindustrie eingesetzt werden, verwendet. Der Anteil an Füllstoffen beträgt 35 bis 300 phr, bevorzugt 40 - 150 phr, mindestens eines bekannten aktiven Füllstoffs, wie Silika, andere Mineralfüllstoffe oder modifizierte Polymermikrogele oder Ruß.

Wenn Silika als Hauptfüllstoffbestandteil verwendet wird, hat dieses eine herkömmliche spezifische Oberfläche zwischen 100 bis 300 m²/g, gemessen als BET-Oberfläche (Stickstoffadsorption), bevorzugt zwischen 120 bis 250 m²/g und besonders bevorzugt zwischen 140 bis 220 m²/g. Wenn Ruß als Hauptfüllstoffbestandteil verwendet wird, beträgt dessen Iodabsorptionszahl 25 bis 300 g/kg, bevorzugt 70 bis 200 g/kg für Laufflächenanwendungen, 40 bis 90 g/kg für Bodyanwendungen, und dessen DBP-Zahl beträgt 50 bis 300 cm³/100 g, bevorzugt 70 bis 150 cm³/100 g. Es kann jedoch auch eine Kombination, bestehend aus Silika mit den genannten Eigenschaften und Ruß mit den genannten Eigenschaften als Hauptfüllstoffbestandteile verwendet werden.

Für unterschiedliche Anwendungen sind unterschiedliche bevorzugte Gesamtanteile für die Füllstoffe auch: Pkw-Lauffläche 50 bis 200 phr, bevorzugt 60 bis 150 phr; Lkw-Lauffläche 40 bis 70 phr, bevorzugt 40 bis 65 phr; Body: bevorzugt 35 bis 80 phr.

Die Reifenzusammensetzung kann zusammen mit Silika und/oder Ruß optional auch andere Füllstoffe, wie etwa Aluminiumhydroxid, Phyllosilikate, Kreide, Stärke, Magnesiumoxid, Titandioxid, Kautschukgele, Kurzfasern usw. in jeder gewünschten Kombination enthalten.

Wenn Silika verwendet wird, kann es mit Organosilanen, wie sie in der Kautschukindustrie verwendet werden, aktiviert werden.

Beispiele, aber nicht auf diese beschränkt, sind TESPD, TESPT oder die in der US11/617,683, US11/617,649, US11/617,663, US11/617,653 angegebene Organosilane oder die Silanttypen NXT, NXT-low-VOC, NXT-Z von MPM (Momentive Performance Materials), wie in der US2006/0161015 oder in WO2008/003514 beschrieben.

Die Reifenzusammensetzung enthält 0,1 bis 20 phr, bevorzugt 0,1 bis 15 phr, besonders bevorzugt 0,1 bis 10 phr, mindestens eines Vulkanisationsbeschleunigers, der ausgewählt ist aus der Gruppe, enthaltend Thiazolbeschleuniger, Mercaptobeschleuniger, Sulfenamidbeschleuniger, Guanidinbeschleuniger, Thiurambeschleuniger, Dithiocarbamatbeschleuniger, Aminbeschleuniger, Thioharnstoffe und/oder andere bekannte Beschleuniger.

Der mengenmäßige Anteil des Vulkanisationsbeschleunigers beträgt bevorzugt 0,1 bis 6 phr und hier ist bevorzugt mindestens ein Beschleuniger, der aus den Gruppen der Sulfenamidbeschleuniger ausgewählt ist, wobei N-tert-Butyl-2-benzothiazolsulfenamid (TBBS) oder Cyclohexylbenzothiazolsulfenamid (CBS) bevorzugt zu verwenden sind. Die Mischung kann optional auch Schwefelspender enthalten, die Vernetzungsmittel enthalten, die dem Netzwerk Schwefel spenden, wie sie der fachkundigen Person bekannt sind, oder z. B. in Hofmann & Gupta: Handbuch der Kautschuktechnologie, Gupta-Verlag (2001), Kapitel 7 beschrieben werden, wie Thiuramdisulfid, bevorzugt TBzTD oder Dithiophosphate wie DipDis (bis-(Diisopropyl)thiophosphoryldisulphid), SDT (z. B. Rhenocure SDT 50, Rheinchemie GmbH), Zincalkyldithiophosphat (ZDT) (z. B. Rhenocure ZDT/S, Rheinchemie GmbH).

Der übliche mengenmäßige Gesamtanteil der weiteren oder anderer Additive beträgt 0 bis 250 phr, bevorzugt 10 bis 220 phr und besonders bevorzugt 10 bis 200 phr. Die Additive umfassen z. B. die Vulkanisationshilfsmittel, die keine Beschleuniger sind, Schwefelspender und Schwefel, die der fachkundigen Person bekannt sind, wie z. B. ZnO, Stearinsäure, Harze usw. Andere Additive beinhalten ein oder mehrere Verarbeitungshilfsmittel, einen oder mehrere Weichmacher, ein oder mehrere Ozonschutzmittel und ein oder mehrere Antioxidationsmittel. Weitere Additive, die in der Kautschukmischungstechnologie gut bekannt sind, können gegebenenfalls auch zugegeben werden.
Die Additive umfassen 0 - 60 phr zusätzliche Bestandteile, bevorzugt 0 - 40 phr , wie Ozonschutzwachse, Harze, ZnO, Alterungsschutzmittel usw.

Die Additive umfassen außerdem 0 bis 120 phr, bevorzugt 0 - 90 phr, besonders bevorzugt 0 - 80 phr mindestens eines Weichmachers, wobei der Weichmacher ein Weichmacheröl z. B. ein Mineralöl ist, ausgewählt aus der Gruppe, die DAE (Distillated Aromatic Extracts) und/oder RAE (Residual Aromatic Extract) und/oder TDAE (Treated Distillated Aromatic Extracts) und/oder MES (Mild Extracted Solvents) und/oder naphthenische Öle enthält.

0 bis 80 phr mindestens eines anderen zusätzlichen Weichmachers können in der Reifenzusammensetzung auch vorhanden sein. Dieser andere Weichmacher kann ein synthetischer Weichmacher und/oder eine Fettsäure und/oder ein Fettsäurederivat und/oder ein Harz und/oder ein Faktis und/oder ein Polymer mit niedrigem Molekulargewicht und/oder ein Pflanzenöl und/oder Mineralöle und/oder Ester und/oder Öle aus der Biomasseverflüssigung und/oder Gemische davon sein.

Durch die Zugabe des erfindungsgemäßen Vernetzungsbausteins mit Funktionalität größer 4 kann eine überraschend gute Haltbarkeitsleistung erreicht werden. Das Ergebnis ist tatsächlich eine Verbesserung des Haltbarkeitswerts, während andere physikalische Eigenschaften gleichzeitig auf dem gleichen Niveau verbleiben.

Dies ermöglicht das Entkoppeln der Zielkonflikte zum Beispiel zwischen Rollwiderstand und Haltbarkeit. Dies gilt nicht nur für die Lauffläche sondern auch für andere Reifenkomponenten, z. B. die Seitenwand oder anderer body-Mischungen.

Die Reifenzusammensetzung der Erfindung wird bevorzugt zur Produktion eines Reifens verwendet. Dies kann ein Vollgummireifen oder ein Luftreifen sein. Eine besonders wichtige Anwendung ist hier die Verwendung in der Lauffläche eines Luftreifens und in einer Bodymischung für einen Luftreifen. Der Ausdruck Bodymischung beinhaltet hier Seitenwand, Innenschicht, Apex, Gürtel, Schulter, Gürtelprofil, Gummistreifen (Squeegee), Karkasse und/oder Armierung, ist aber nicht auf diese beschränkt.
Die erfindungsgemäßen Reifenzusammensetzungen sind auch bei der Produktion von technischen Kautschukartikeln, wie etwa einem Schlauch, einer Luftfeder, Dämpfungskörpern und/oder einem Kraftübertragungsriemen nützlich.

Beispielsweise wurde folgender Mischvorgang und folgende Mischausrüstung verwendet, um die beschriebenen Verbindungen zu erhalten, aber andere geeignete Mischausrüstungen und -vorgänge, die der fachkundigen Person bekannt sind, sind ebenfalls möglich. Die Verbindungen in allen Beispielen wurde in einem OOC-BANBURY®-Mischer (Farrell Corp.) mit einem Kammervolumen von 158 Kubikzoll (2.600 cm³) gemischt. Das Mischen des Kautschuks wurde in drei Schritten vorgenommen. Der Mischer wurde mit dem Mischer bei 80 U/Min. und Kühlwasser bei 71 °C eingeschaltet. Die Kautschukpolymere wurden in den Mischer gegeben und mit 30 Sekunden lang stampfend gemischt. Die Füllstoffe und das Silan, falls es verwendet wird, wurden in den Mischer gegeben und 30 Sekunden lang stampfend gemischt. Die anderen Bestandteile in der Vormischung aus Tabelle 1 wurden, abgesehen von den Ölen, in den Mischer gegeben und mit 60 Sekunden lang stampfend gemischt. Die Mischgeschwindigkeit wurde auf 65 U/Min. reduziert und dann wurden die Öle der Vormischung in den Mischer gegeben und 60 Sekunden lang stampfend gemischt. Die Mischerhals wurde ausgeklopft und die Bestandteile stampfend gemischt bis die Temperatur 150 °C erreichte. Die Bestandteile wurden dann für weitere 3 Minuten und 30 Sekunden gemischt. Die Mischgeschwindigkeit wurde so eingestellt, dass die Temperatur zwischen 150 und 155 °C gehalten wurde. Der Kautschuk wurde abgekippt (aus dem Mischer entfernt), eine Bahn wurde bei etwa 85 ° bis 90 °C auf einer Walzenmühle gebildet und durfte dann auf Umgebungstemperatur abkühlen.

Im zweiten Schritt wurde die Vormischung erneut in den Mischer gegeben. Die Geschwindigkeit des Mischers betrug 80 U/Min., das Kühlwasser wurde auf 71 °C eingestellt und der Kolbendruck wurde auf 25 psi eingestellt. Die Vormischung wurde 150 Sekunden lang stampfend gemischt, während die Temperatur der Vormischung auf bis zu 150 °C gebracht wurde und dann wurde die Geschwindigkeit des Mischers auf 50 U/Min. reduziert. Der Kautschuk wurde 40 Sekunden lang bei Temperaturen zwischen 150 und 155 °C gemischt. Nach dem Mischen wurde der Kautschuk abgekippt (aus dem Mischer entfernt), eine Bahn wurde bei etwa 85 ° bis 90 °C auf einer Walzenmühle gebildet. Der Kautschuk durfte auf Umgebungstemperatur abkühlen.

Im dritten Schritt wurde die Geschwindigkeit des Mischers auf 50 U/Min, eingestellt, das Kühlwasser wurde auf 71 °C eingestellt und der Kolbendruck wurde auf 25 psi eingestellt. Die Kautschukvormischung und die Vulkanisationsagenzien wurden 190 Sekunden lang stampfend gemischt, während die Temperatur des fertigen Gemisches auf 115 °C gebracht wurde. Nach dem Mischen wurde der Kautschuk abgekippt (aus dem Mischer entfernt), eine Bahn wurde bei etwa 85 ° bis 90 °C auf einer Walzenmühle gebildet und durfte dann auf Umgebungstemperatur abkühlen. Die Vernetzungsbedingung betrug 160 °C für 20 Minuten.

Die Erfindung wird nun anhand von Vergleichsbeispielen und erfindungsgemäßen Beispielen, die in den folgenden Tabellen verglichen werden, ausführlicher erläutert. Die Tabellen basieren auf unterschiedlichen Zusammensetzungen, die unterschiedliche Bestandteile enthalten, die wiederum von der Silanklasse und der Verbindungsanwendung abhängen.

Tabelle 1 zeigt die Mischungszusammensetzung und die damit verbundenen Labortestergebnisse, außerdem zeigt sie die Testergebnisse, die direkt an einem Reifen erhalten wurden.

Die Reifenzusammensetzung C 1 ist eine Vergleichsmischung, die nur Schwefel enthält, während die Reifenzusammensetzungen E1 erfindungsgemäß mit Schwefel und unter Zugabe des Vulkanisationsmittels der vorliegenden Erfindung vulkanisiert wurden.

In allen Mischungsbeispielen, die in der Tabelle gezeigt werden, sind die Angaben zum mengenmäßigen Anteil in Gewichtsanteilen, basierend auf 100 Gewichtsanteilen der gesamten Kautschukmasse.

Die Herstellung der Labormischung fand in einem Labortangentialmischer statt. Alle Mischungen wurden verwendet, um Prüfkörper durch Vulkanisation zu produzieren, wobei diese unter den Vulkanisationsbedingungen produziert wurden, die dem Fachmann bekannt sind, und diese Prüfkörper wurden verwendet, um die für die Kautschukindustrie typischen Materialeigenschaften zu bestimmen. Für die Tests an den Prüfkörpern wurden die folgenden Testverfahren angewandt:
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte bei 300 % statischer Dehnung bei Raumtemperatur gemäß DIN 53 504
- Abriebwerte gemäß DIN 53 516
- Abrieb nach Grosch gemäß Grosch, K.A., the 131th ACS Rubber Div. Meeting, No. 97 (1987) und Grosch, K.A. et al., Kautschuk Gummi Kunststoffe, 50, 841 (1997)
- Weiterreißfestigkeit nach Graves bei Raumtemperatur gemäß DIN 53 515
- Ermüdungsbeständigkeit als Anzahl der Lastwechsel bis zum Bruch einer hantelförmigen Probe unter einem sich ständig wiederholenden Belastungszyklus mit einer Frequenz von 104 ± 8 min⁻¹, bestimmt mit einem Monsanto Fatigue-to-Failure-Tester (FTF) bei 136 % Belastung und 60 °C
- Hochgeschwindigkeitsreißenergie (HSTE) gemäß DIN 53 448 oder ASTM D 624-86
- Lebensdauer-Analyse (LTA) mit 30 % Belastung
- Mooney-Anvulkanisation gemäß ASTM D 1646
- Mooney-Viskosität gemäß ASTM 1646
- Speichermodul/Verlustmodul gemäß DIN 53 513
- Rheometer (MDR2000) gemäß DIN 53 529

Luftreifen mit einer Größe von 205/55/R16 wurden mit einer Lauffläche produziert, die aus den Mischungen besteht, die in Tabelle 1 aufgelistet sind, und die Reifen wurden für Versuche zum Nassbremsen auf Asphalt (niedriger µ) und Beton (hoher µ) und auch zum Aquaplaning und auch zum Rollwiderstand verwendet. Der Abrieb wurde ebenfalls gemessen. Die Eigenschaften des Reifens, bei dem Mischung C1 verwendet wurde, wurden als 100 genommen, und Werte von mehr als 100 für die Mischung E1 bezeichnen eine Verbesserung bei der entsprechenden Eigenschaft. Die Ergebnisse der Versuche werden in Tabelle 1 gezeigt.

Es wurde festgestellt, dass die Vergleichsmischung C1, die mit der herkömmlichen Zugabe von elementarem Schwefel vulkanisiert wurde, in den Laborergebnissen, vgl. Tabelle 1, etwa 15 % höheren Abrieb (DIN-Abrieb) aufweist und ihre Abriebeigenschaft daher wesentlich schlechter ist. Diese Tendenz wird auch in den entsprechenden Reifenversuchen, vgl. Tabelle 1, sichtbar. Andere physikalische Eigenschaften bleiben nicht nur im Labor auf ungefähr dem gleichen Niveau, vgl. Tabelle 1, sondern auch im Reifenversuch, vgl. Tabelle 1.

Wenn der Abrieb als Labordaten in absoluten Zahlen (mm³) angegeben ist, stellt er den Gewichtsverlust während des Tests dar, was bedeutet, dass niedrigere Werte eine Verbesserung in allen Tabellen mit physikalischen Daten bezeichnen. Bei relativen Zahlen (%) in Bezug auf Abrieb oder Reifeneigenschaften bedeuten höhere Werte immer eine bessere Leistung.

Weitere Beispiele, die in den Tabellen 2 bis 6 angegeben sind, zeigen die Anwendung unterschiedlicher Spezies, die unterschiedlichen Vernetzungsmitteln mit Funktionalitäten größer 4 in unterschiedlichen Reifenzusammensetzungen entsprechen. Die Laborergebnisse spiegeln immer die Verbesserung von Ermüdungs- und/oder Reiß- und/oder Abriebeigenschaften wider, während gleichzeitig die anderen Materialeigenschaften im Wesentlichen konstant bleiben.

Wenngleich nur einige wenige Ausführungsformen der vorliegenden Erfindung gezeigt und beschrieben wurden, versteht es sich, dass diese nicht darauf beschränkt ist.

Die 'C'-Zusammensetzungen sind Kontrollzusammensetzungen und die 'E'-Zusammensetzungen sind gemäß der beschriebenen Erfindung.
Die Strukturen der einzelnen erfindungsgemäßen Vulkanisationsmittel, abgekürzt MFXL (für Multifunctional Crosslinker) sind wie folgt: 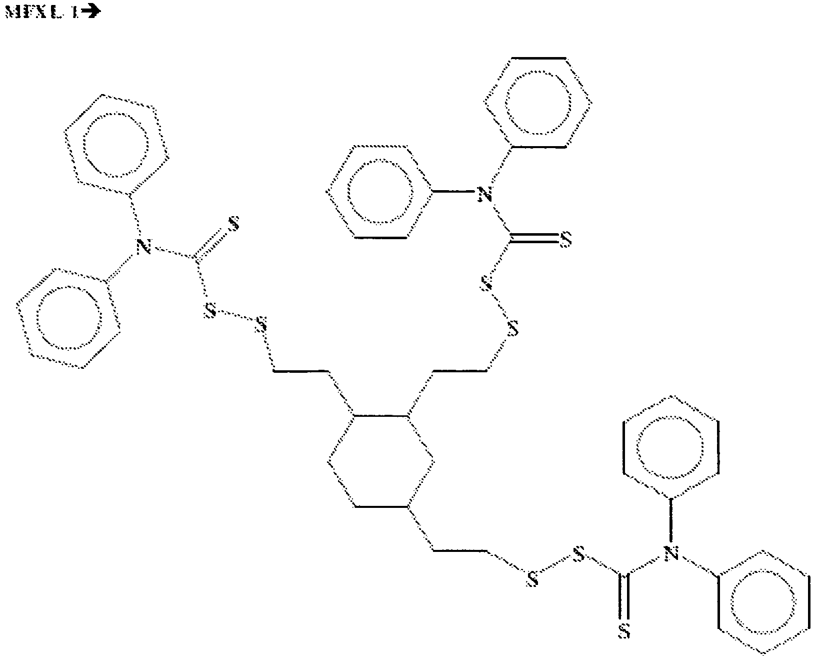 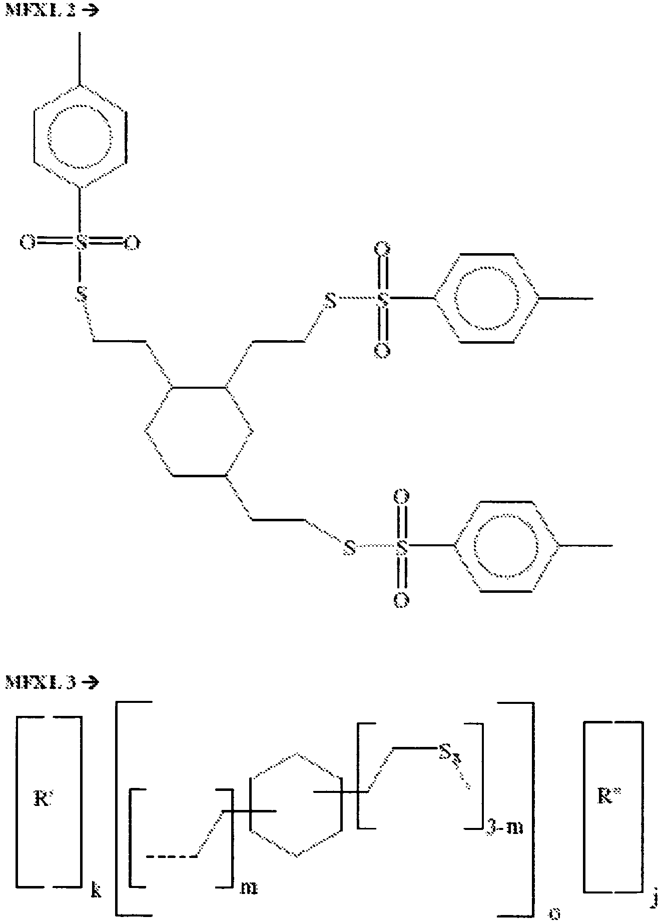 wobei m gleich 0 bis 2, k, o und j positive ganze Zahlen sind.

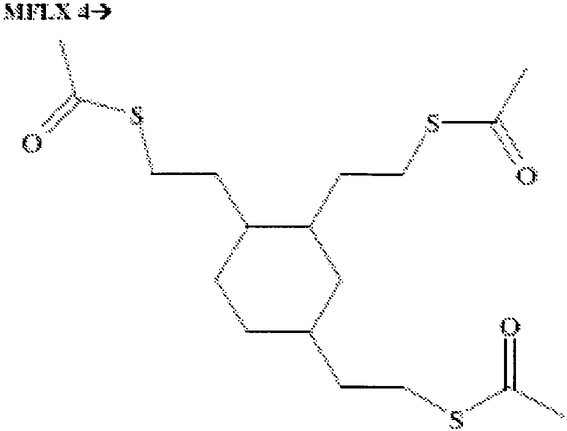

**Tabelle 1 Verbesserung bei Ermüdung, Reißen und Abrieb/Verschleiß für Pkw-Laufflächen gegenüber Kontrollvernetzern und multifunktionalen Vernetzern**

| Pkw-Lauffläche | | C1 | E1 |
|---|---|---|---|
| NR | | 20,000 | 20,000 |
| BR | | 35,000 | 35,000 |
| SSBR | | 45,000 | 45,000 |
| Silika | | 85,000 | 85,000 |
| Weichmacher | | 45,000 | 45,000 |
| Alterungsschutz | | 6,000 | 6,000 |
| ZINKOXID | | 2,500 | 2,500 |
| STEARINSÄURE | | 2,500 | 2,500 |
| TESPT | | 6,754 | 6,754 |
| TBBS | | 1,810 | 1,810 |
| VULCUREN VP KA 9188 | | 2,544 | - |
| **MFXL 1** | **phr** | - | **2,640** |
| **MFXL 1** | **mhr** | | **0,0027** |
| Mooney (ML1+4) | Mooney-Einheiten | 43,5 | 43,8 |
| MDR 2000 160 C | | | |
| Dauer (Vulkanisationsgrad) - 10 | Min. | 2,54 | 2,59 |
| Dauer (Vulkanisationsgrad) - 95 | Min. | 15,25 | 14,42 |
| ML | dNm | 1,79 | 1,85 |
| MHF | dNm | 19,04 | 19,54 |
| MHF - ML | dNm | 17,25 | 17,69 |
| | | | |
| Vemetzungsabstand | nm | 7,9 | 7,8 |
| Dichte RT | g/cm³ | 1,164 | 1,165 |
| Härte Shore A RT | Shore A | 58,6 | 58,1 |
| Elastizität RT | Prozent | 42,5 | 42,1 |
| Elastizität 70 C | Prozent | 54,1 | 54,8 |
| Zugfestigkeitstest RT | | | |
| Zugfestigkeit | MPa | 15,9 | 15,3 |
| Reißdehnung | Prozent | 550 | 558 |
| Spannung (Dehnung) - 50 | MPa | 1,02 | 1,09 |
| Spannung (Dehnung) - 100 | MPa | 1,85 | 1,83 |
| Spannung (Dehnung) - 200 | MPa | 4,3 | 4,24 |
| Spannung (Dehnung) - 300 | MPa | 7,58 | 7,44 |
| | | | |
| Grosch-Abrieb | % | 100 | 109 |
| Abrieb DIN53516 RT | mm³ | 49,23 | 42,9 |
| | | | |
| Tg (E") | °C | -52 | -52 |

| **Reifentest*)** | | | |
|---|---|---|---|
| Shore A RT | | 58,1 | 59 |
| ABS Nassbremsen (niedriger µ) | % | 100 | 102 |
| ABS Nassbremsen (hoher µ) | % | 100 | 99,9 |
| Trockenbremsen | % | 100 | 100 |
| Trockenhandling | % | 100 | 100,6 |
| Aquaplaning | % | 100 | 100 |
| Traktion auf Schnee | % | 100 | 98 |
| künstlichem Eis | % | 100 | 98,5 |
| Rollwiderstand | % | 100 | 99 |
| Verschleiß | % | 100 | 108 |

| | | | |
|---|---|---|---|
| *) höhere Werte bedeuten bessere Leistung | | | |

**Tabelle 2 Verbesserung bei Ermüdung, Reißen und Abrieb/Verschleiß für Lkw-Laufflächen gegenüber Kontrollvernetzern und multifunktionalen Vernetzern**

| **Lkw-Lauffläche** | | **C 2** | **C 3 C6-T2** | **E 2 MFXL** |
|---|---|---|---|---|
| NR | phr | 100,000 | 100,000 | 100,000 |
| N 220 | phr | 43,500 | 43,500 | 43,500 |
| Alterungsschutz | phr | 6,000 | 6,000 | 6,000 |
| ZINKOXID INDIREKT | phr | 3,000 | 3,000 | 3,000 |
| STEARINSÄURE | phr | 2,000 | 2,000 | 2,000 |
| TBBS | phr | 1,100 | 1,100 | 1,100 |
| SCHWEFEL | phr | 1,800 | 1,602 | 1,100 |
| C6-T2 | phr | - | 0,946 | - |
| **MFXL 2** | **phr** | - | - | **2,780** |
| **MFXL 2** | **mhr** | | | **0,00382** |
| Mooney ML(1+4) 100°C | | | | |
| Mooney (ML1+4) | Mooney-Einheiten | 60 | 59,3 | 60,3 |
| MDR 2000 160°C | | | | |
| Dauer (Vulkanisationsgrad) - 10 | Min. | 2,41 | 2,2 | 2,28 |
| Dauer (Vulkanisationsgrad) - 95 | Min. | 5,92 | 6,05 | 7,6 |
| ML | dNm | 2,52 | 2,53 | 2,67 |
| MHF | dNm | 15,15 | 16,1 | 15,12 |
| MHF - ML | dNm | 12,63 | 13,57 | 12,45 |
| Dichte RT | g/cm³ | 1,09 | 1,09 | 1,09 |
| Härte Shore A RT | Shore A | 56,9 | 59,5 | 60,9 |
| Härte Shore A 70 C | Shore A | 51,6 | 55,3 | 54,6 |
| Elastizität RT | Prozent | 45,7 | 46,8 | 43,6 |
| Elastizität 70°C | Prozent | 56,9 | 57,9 | 52,4 |
| Zugfestigkeitstest RT | | | | |
| Zugfestigkeit | MPa | 20,9 | 23,3 | 21,7 |
| Reißdehnung | Prozent | 559 | 562 | 571 |
| Spannung (Dehnung) - 50 | MPa | 0,96 | 1,1 | 1,07 |
| Spannung (Dehnung) - 300 | MPa | 8,87 | 10,16 | 9,02 |
| Bruchenergiedichte | J/cm³ | 42,2 | 48,5 | 45,3 |
| HSTE | MJ/m³ | 10,13 | 9,18 | 13,03 |
| Graves 100°C | N/mm | 60,02 | 60,52 | 73,20 |
| Bsp. Temp.-sweep 50/30N T(E"max) | Celsius | -61,3 | -61,2 | -61,2 |

**Tabelle 3 Verbesserung bei Ermüdung, Reißen und/oder Abrieb/Verschleiß für Karkassenverbindung (Gürtellage) gegenüber Kontrollvernetzern und multifunktionalen Vernetzern**

| **Gürtelmischung** | | **C4** | **E3** | **E4** | **E5** |
|---|---|---|---|---|---|
| NR | phr | 80,000 | 80,000 | 80,000 | 80,000 |
| BR | phr | 20,000 | 20,000 | 20,000 | 20,000 |
| Silika | phr | 56,500 | 56,500 | 56,500 | 56,500 |
| Harze | phr | 7,500 | 7,500 | 7,500 | 7,500 |
| Alterungsschutz | phr | 3,750 | 3,750 | 3,750 | 3,750 |
| Co-Salz | phr | 0,360 | 0,360 | 0,360 | 0,360 |
| Verarbeitungshilfsmittel | phr | 1,500 | 1,500 | 1,500 | 1,500 |
| ZnO | phr | 8,000 | 8,000 | 8,000 | 8,000 |
| TESPT | phr | 8,500 | 8,500 | 8,500 | 8,500 |
| N 339 | phr | 2,000 | 2,000 | 2,000 | 2,000 |
| HMMM HARZ 65% | phr | 3,850 | 3,850 | 3,850 | 3,850 |
| DCBS | phr | 1,600 | 1,600 | 1,600 | 1,600 |
| SCHWEFEL | phr | 6,000 | 5,700 | 5,100 | 3,600 |
| **MFXL 3** | **mhr** | | **0,00190** | **0,00380** | **0,00760** |
| **MFXL 3** | **phr** | **-** | **0,680** | **1,360** | **2,720** |
| Mooney (ML1+4) | Mooney-Einheiten | 90,6 | 91,2 | 92,7 | 89,8 |
| | | | | | |
| MDR 2000 160°C | | | | | |
| Dauer (Vulkanisationsgrad) - 10 | Min. | 0,93 | 0,84 | 0,83 | 0,83 |
| Dauer (Vulkanisationsgrad) - 95 | Min. | 15,55 | 14,45 | 13,86 | 13,95 |
| ML | dNm | 3,7 | 3,84 | 3,84 | 3,71 |
| MHF | dNm | 37,68 | 38,64 | 36,83 | 31,38 |
| MHF - ML | dNm | 33,98 | 34,8 | 32,99 | 27,67 |
| Dichte RT | g/cm³ | 1,21 | 1,211 | 1,211 | 1,204 |
| Härte Shore A RT | Shore A | 78 | 79,8 | 78,65 | 75,9 |
| Härte Shore A 70 C | Shore A | 75,1 | 76,65 | 77,05 | 72,9 |
| Elastizität RT | Prozent | 43,9 | 44,7 | 44 | 42,5 |
| Elastizität 70°C Zugfestigkeitstest (R1) RT | Prozent | 55,3 | 56,9 | 55,1 | 52,9 |
| Zugfestigkeit | MPa | 18,5 | 18,2 | 15,5 | 19,0 |
| Bruchdehnung | Prozent | 412 | 408 | 363 | 477 |
| Spannung (Dehnung) - 50 | MPa | 2,2 | 2,3 | 2,3 | 1,9 |
| Spannung (Dehnung) - 300 | MPa | 14,1 | 14,2 | 13,8 | 12,1 |
| Graves 100°C | N/mm | 51,1 | 56,2 | 62,2 | 57,3 |

**Tabelle 4 Verbesserung bei Ermüdung und Reißen und Abrieb/Verschleiß für Karkassenverbindung (Gürtellage) gegenüber Kontrollvernetzern und multifunktionalen Vernetzern**

| **Gürtelmischung** | | **C5** | **E6** | **E7** | **E8** |
|---|---|---|---|---|---|
| NR | phr | 100,000 | 100,000 | 100,000 | 100,000 |
| N326 | phr | 55,000 | 55,000 | 55,000 | 55,000 |
| Silika | phr | 9,800 | 9,800 | 9,800 | 9,800 |
| Harz, Weichmacher | phr | 9,800 | 9,800 | 9,800 | 9,800 |
| Alterungsschutz | phr | 2,500 | 2,500 | 2,500 | 2,500 |
| Co-Salz | phr | 2,000 | 2,000 | 2,000 | 2,000 |
| ZnO | phr | 8,000 | 8,000 | 8,000 | 8,000 |
| N 339 | phr | 2,000 | 2,000 | 2,000 | 2,000 |
| HMMM HARZ 65% | phr | 2,000 | 2,000 | 2,000 | 2,000 |
| DCBS | phr | 1,300 | 1,300 | 1,300 | 1,300 |
| UNLÖSL. SCHWEFEL | phr | 5,520 | 5,330 | 4,300 | 3,900 |
| **MFXL 3** | **phr** | - | **0,680** | **1,360** | **2,720** |
| **MFXL 3** | **mhr** | | **0,0019** | **0,0038** | **0,0076** |
| Mooney (ML1+4) MDR 2000 160°C | Mooney-Einheiten | 80,2 | 80,9 | 82,3 | 82,9 |
| Dauer (Vulkanisationsgrad) - 10 | Min. | 1,59 | 1,67 | 1,73 | 1,78 |
| Dauer (Vulkanisationsgrad) - 95 | Min. | 10,38 | 10,42 | 9,3 | 9,26 |
| ML | dNm | 3,18 | 3,19 | 3,35 | 3,43 |
| MHF | dNm | 32,08 | 31,43 | 29,16 | 28,02 |
| MHF - ML | dNm | 28,9 | 28,24 | 25,81 | 24,59 |
| Dichte RT | g/cm³ | 1,204 | 1,202 | 1,202 | 1,203 |
| Härte Shore A RT | Shore A | 77,5 | 76,8 | 75,1 | 75,6 |
| Härte Shore A 70 C | Shore A | 75 | 73,7 | 71,5 | 71,35 |
| Elastizität RT | Prozent | 39,1 | 39,3 | 38,5 | 37,6 |
| Elastizität 70°C Zugfestigkeitstest RT | Prozent | 53,3 | 52,5 | 51,9 | 50,5 |
| Zugfestigkeit | MPa | 19,9 | 19,8 | 19,5 | 19,3 |
| Bruchdehnung | Prozent | 360 | 362 | 375 | 377 |
| Spannung (Dehnung) - 50 | MPa | 2,7 | 2,6 | 2,5 | 2,4 |
| Spannung (Dehnung) - 300 | MPa | 18,2 | 18,0 | 17,0 | 16,7 |
| Bruchenergiedichte | J/cm³ | 31,9 | 31,8 | 32,2 | 32,1 |
| Graves 100°C | N/mm | 48,95 | 53,55 | 59,28 | 63,37 |

**Tabelle 5 Verbesserung bei Ermüdung und Reißen und Abrieb/Verschleiß für Lkw-Laufflächen gegenüber Kontrollvernetzern und multifunktionalen Vernetzern**

| **Lkw-Lauffläche** | | **C6** | **E9** | **C7** | **E10** | **C8** | **E11** |
|---|---|---|---|---|---|---|---|
| NR | phr | 100,000 | 100,000 | 100,000 | 100,000 | 100,000 | 100,000 |
| N121 | phr | 48,000 | 46,000 | 46,000 | 46,000 | 46,000 | 46,000 |
| Verarbeitungs hilfsmittel | phr | 6,900 | 2,400 | 2,400 | 2,400 | 2,400 | 2,400 |
| Alterungsschu tz | phr | 1,000 | 1,000 | 1,000 | 1,000 | 1,000 | 1,000 |
| Stearinsäure | phr | 2,000 | 2,000 | 2,000 | 2,000 | 2,000 | 2,000 |
| ZnO | phr | 3,000 | 3,000 | 3,000 | 3,000 | 3,000 | 3,000 |
| TBBS | phr | 0,800 | 0,800 | 1,200 | 1,200 | 2,600 | 2,600 |
| Schwefel | phr | 1,600 | 1,040 | 1,200 | 0,870 | 0,550 | 0,450 |
| **MFXL 3** | **phr** | - | **4,078** | - | **4,078** | - | **1,359** |
| **MFXL 3** | **mhr** | | **0,0114** | | **0,0114** | | **0,0038** |
| MDR 2000 160°C | | | | | | | |
| Dauer (Vulkanisation sgrad)- 10 | Min. | 2,66 | 2 | 2,99 | 2,05 | 3,27 | 2,8 |
| Dauer (Vulkanisation sgrad) - 90 | Min. | 6,39 | 6,64 | 6,16 | 6,72 | 8,03 | 8,38 |
| ML | dNm | 2,68 | 2,84 | 2,66 | 2,74 | 2,46 | 2,57 |
| MHF | dNm | 16,02 | 13,62 | 16,02 | 14,74 | 15,26 | 14,96 |
| MHF - ML | dNm | 13,34 | 10,78 | 13,36 | 12 | 12,8 | 12,39 |
| Dichte RT | g/cm³ | 1,098 | 1,101 | 1,097 | 1,099 | 1,095 | 1,096 |
| Härte Shore A RT | Shore A | 61,3 | 59,1 | 60,2 | 60,1 | 59,55 | 59,05 |
| Härte Shore A 70 C | Shore A | 56,2 | 51,75 | 55,05 | 53,25 | 53,95 | 53 |
| Elastizität RT | Prozent | 44,6 | 42,1 | 44,6 | 42,6 | 45,7 | 44,1 |
| Elastizität 70°C | Prozent | 59,3 | 52,9 | 60,2 | 55,1 | 57,3 | 58 |
| Zugfestigkeitst est RT | | | | | | | |
| Zugfestigkeit | MPa | 24,7 | 20,5 | 24,5 | 22,1 | 23,6 | 23, |
| Bruchdehnung | Prozent | 525 | 508 | 522 | 508 | 498 | 511 |
| Spannung 50% | MPa | 1,17 | 1,07 | 1,14 | 1,13 | 1,05 | 1,05 |
| Spannung 300% | MPa | 12,70 | 10,75 | 12,68 | 11,83 | 12,78 | 12,41 |
| HSTE | MJ/m³ | 7,67 | 13,38 | 7,58 | 10,33 | 7,14 | 8,5 |
| Graves 100 | N/mm | 64,20 | 74,17 | 65,93 | 81,38 | 62,23 | 85,18 |

**Tabelle 6 Verbesserung bei Ermüdung und Reißen und Abrieb/Verschleiß für Lkw-Laufflächen gegenüber Kontrollvernetzern und multifunktionalen Vernetzern (C bedeutet Kontrolle)**

| **Lkw-Lauffläche** | | **C9** | **E12** | **E13** | **C10** | **E13** | **C11** | **E14** |
|---|---|---|---|---|---|---|---|---|
| NR | phr | 100,000 | 100,000 | 100,000 | 100,000 | 100,000 | 100,000 | 100,000 |
| N121 | phr | 48,000 | 48,000 | 48,000 | 48,000 | 48,000 | 48,000 | 48,000 |
| Verarbeitungshilfsmittel | phr | 2,400 | 2,400 | 2,400 | 2,400 | 2,400 | 2,400 | 2,400 |
| Alterungsschutz | phr | 6,000 | 1,000 | 1,000 | 1,000 | 1,000 | 1,000 | 1,000 |
| Stearinsäure | phr | 2,000 | 2,000 | 2,000 | 2,000 | 2,000 | 2,000 | 2,000 |
| ZnO | phr | 3,000 | 3,000 | 3,000 | 3,000 | 3,000 | 3,000 | 3,000 |
| TBBS | phr | 0,800 | 0,800 | 0,800 | 1,200 | 1,200 | 2,600 | 2,600 |
| SCHWEFEL | phr | 1,600 | 1,250 | 1,250 | 1,200 | 1,080 | 0,550 | 0,460 |
| **MFXL 4** | **phr** | - | **1,016** | **1,484** | - | **1,016** | | **1,016** |
| **MFXL 4** | **mhr** | | **0,003** | **0,004** | | **0,003** | | **0,003** |
| MDR 2000 160°C | | | | | | | | |
| Dauer (Vulkanisationsgrad) - 10 | Min. | 2,6 | 2,85 | 2,86 | 2,97 | 3,01 | 3,25 | 3,29 |
| Dauer (Vulkanisationsgrad) - 90 | Min. | 6,36 | 6,48 | 6,43 | 6,09 | 6,18 | 8,04 | 8,5 |
| ML | dNm | 2,77 | 2,64 | 2,61 | 2,68 | 2,54 | 2,47 | 2,4 |
| MHF | dNm | 15,98 | 14,33 | 14 | 16,05 | 15,08 | 15,31 | 13,7 |
| MHF - ML | dNm | 13,21 | 11,69 | 11,39 | 13,37 | 12,54 | 12,84 | 11,3 |
| Temperatur (Celsius) | | 160 | 160 | 160 | 160 | 160 | 160 | 160 |
| Dauer (Min.) | | 10 | 10 | 10 | 10 | 10 | 15 | 15 |
| Dichte RT | g/cm³ | 1,099 | 1,098 | 1,098 | 1,097 | 1,097 | 1,095 | 1,095 |
| Härte Shore A RT | Shore A | 60,2 | 58,1 | 57,25 | 60,55 | 58,9 | 59,45 | 58,45 |
| Härte Shore A 70 C | Shore A | 55,7 | 52,25 | 51,4 | 54,75 | 53,1 | 54,25 | 51,5 |
| Elastizität RT | Prozent | 46,3 | 43,1 | 43,6 | 46,8 | 44,4 | 46,8 | 42,3 |
| Elastizität 70°C Zugfestigkeitstest RT | Prozent | 59,1 | 56,7 | 58,2 | 60,4 | 58,3 | 59 | 55,2 |
| Zugfestigkeit | MPa | 25,4 | 23,7 | 23,6 | 25,1 | 24,6 | 24,5 | 22,2 |
| Bruchdehnung | Prozent | 537,3 | 556,3 | 555,6 | 527,0 | 549,2 | 517,2 | 521,0 |
| Spannung 50% | MPa | 1,163 | 1,007 | 0,995 | 1,14 | 1,048 | 1,058 | 0,948 |
| Spannung 100% | MPa | 2,067 | 1,709 | 1,688 | 2,028 | 1,814 | 1,908 | 1,62 |
| Spannung 200% | MPa | 6,182 | 5,092 | 5,071 | 6,264 | 5,575 | 6,184 | 5,097 |
| Spannung 300% | MPa | 12,6 | 10,8 | 10,7 | 12,9 | 11,6 | 12,8 | 11,0 |
| Bruchenergiedichte | J/cm³ | 51,9 | 48,8 | 48,8 | 50,4 | 50,8 | 47,6 | 42,1 |
| HSTE | MJ/m³ | 7,69 | 10,64 | 10,95 | 7,53 | 9,71 | 6,79 | 10,04 |
| Graves 100°C | N/mm | 61,55 | 66,48 | 73,90 | 72,32 | 76,30 | 54,02 | 57,75 |

## Patentansprüche

1. Reifenzusammensetzung mit einer Shore-A-Härte gemäß DIN 53 505 und ASTM D2240 von nicht weniger als 40 und nicht mehr als 95 und einer Glasübergangstemperatur Tg (E"max) gemäß DIN 53 513 mit einem spezifizierten Temperatursweep von -80 °C bis +80 °C und einer spezifizierten Verdichtung von 10 + 0,2 % bei 10 Hz, von nicht weniger als -80 °C und nicht mehr als 0 °C, **dadurch gekennzeichnet, dass** sie
- zumindest einen vulkanisierbaren Dienkautschuk, ausgewählt aus Naturkautschuken, synthetischen Polyisoprenkautschuken, Polyisobutylenkautschuken, Polybutadienkautschuken und Styrol-Butadien-Kautschuken;
- 35 bis 300 phr zumindest eines aktiven Füllstoffs, ausgewählt aus Rußen, Silikas, siliciumbasierten Füllstoffen und Metalloxiden, von denen zumindest 10 phr Ruß, Silika oder eine Kombination davon sein muss;
- 0 bis 250 phr anderer oder weiterer Additive;
- 0,1·10⁻³ bis 42·10⁻³ mhr (**m**ol per **h**undred parts of **r**ubber) eines Vulkanisationsmittels, das mit einer Funktionalität größer 4 vernetzt; und
- 0,1 bis 20 phr zumindest eines Vulkanisationsbeschleunigers enthält, wobei das Vulkanisationsmittel Strukturen chemischer Art von Kohlenwasserstoffen oder Heterokohlenwasserstoffen oder Siloxanen enthält und eine Schwefel-enthaltende Struktur mit der folgenden allgemeinen Formel enthält:
G[eₐH₂ₐ₋CH₂₋SₓY]ₙ
wobei G eine polyvalente Kohlenwasserstoffgruppe und/oder eine Heterokohlenwasserstoffgruppe und/oder eine Siloxangruppe ist, die 1 bis 100 Atome enthält; jedes Vorkommen von Y unabhängig ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe); und jedes Vorkommen der tiefgestellten Variablen a, x und n ganze Zahlen sind, für die unabhängig gilt: a gleich 0 bis 6; x gleich 0 bis 8; und n gleich 3 bis 5.

2. Reifenzusammensetzung nach Anspruch 1, **dadurch gekennzeichnet, dass** das Vulkanisationsmittel eine Schwefel-enthaltende cyclische Struktur mit der folgenden allgemeinen Formel enthält:
G[CₐH₂ₐ₋CH₂₋SₓY]ₙ
wobei G eine polyvalente cyclische Hydrocarbylengruppe und/oder Heterohydrocarbylengruppe und/oder cyclische Siloxangruppe ist, die 5 bis 8 Atome in der cyclischen Struktur enthält; jedes Y unabhängig ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe); und jedes a, x und n ganze Zahlen sind, für die unabhängig gilt: a gleich 0 bis 6; x gleich 0 bis 8; und n gleich 3 bis 5.

3. Reifenzusammensetzung nach Anspruch 1, **dadurch gekennzeichnet, dass** das Vulkanisationsmittel einen Schwefel-enthaltenden cyclischen aliphatischen Kohlenwasserstoff mit der folgenden allgemeinen Formel enthält:
G[CₐH₂ₐ-CH₂-SₓY]ₙ
wobei G eine polyvalente cyclische Hydrocarbylengruppe ist, die 5 bis 7 Kohlenstoffatome enthält; jedes Y unabhängig ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe); und jedes a, x und n ganze Zahlen sind, für die unabhängig gilt: a gleich 0 bis 6; x gleich 0 bis 8; und n gleich 3 bis 5.

4. Reifenzusammensetzung nach Anspruch 1, **dadurch gekennzeichnet, dass** sie 30 bis 100 phr zumindest eines Dienkautschuks enthält.

5. Reifenzusammensetzung nach Anspruch 1, **dadurch gekennzeichnet, dass** weitere Additive Weichmacher umfassen.

6. Reifenzusammensetzung nach Anspruch 1, **dadurch gekennzeichnet, dass** sie 0,1 bis 15 phr zumindest eines Vulkanisationsbeschleunigers enthält.

7. Reifenzusammensetzung nach Anspruch 1, **dadurch gekennzeichnet, dass** sie 10 bis 220 phr weitere Additive enthält.

8. Reifenzusammensetzung nach Anspruch 1, **dadurch gekennzeichnet, dass** der Füllstoff zumindest ein amorphes Silika ist.

9. Reifenzusammensetzung nach Anspruch 1, **dadurch gekennzeichnet, dass** der Füllstoff amorphes Silika und Ruß enthält.

10. Reifenzusammensetzung nach Anspruch 1, **dadurch gekennzeichnet, dass** der Füllstoff zumindest ein Ruß ist.

11. Verwendung der Reifenzusammensetzung nach Anspruch 1 zur Herstellung eines Reifens.

12. Verwendung der Reifenzusammensetzung nach Anspruch 11 zur Herstellung der Lauffläche oder eines inneren Bauteils eines Reifens.

## Claims

1. Tire composition with Shore A hardness to DIN 53 505 and ASTM D2240 of not less than 40 and not more than 95 and with glass transition temperature Tg (E"max) of not less than -80°C and not more than 0°C to DIN 53 513, using a specified temperature sweep from -80°C to +80°C and using a specified compaction of 10 + 0.2% at 10 Hz, **characterized in that** it comprises
- at least one vulcanizable diene rubber, selected from natural rubbers, synthetic polyisoprene rubbers, polyisobutylene rubbers, polybutadiene rubbers, and styrene-butadiene rubbers;
- from 35 to 300 phr of at least one active filler, selected from carbon blacks, silicas, silicon-based fillers, and metal oxides, of which at least 10 phr have to be carbon black, silica, or a combination thereof;
- from 0 to 250 phr of other or further additives;
- 0.1-10⁻³ to 42·10⁻³ mhr (mol per hundred parts of rubber) of a vulcanizing agent which crosslinks with provision of a functionality greater than 4; and
- from 0.1 to 20 phr of at least one vulcanization accelerator, where the vulcanizing agent comprises structures of the chemical nature of hydrocarbons, or of heterohydrocarbons, or of siloxanes, and comprises a sulfur-containing structure having the following general formula:
G[CₐH₂ₐ-CH₂-SₓY]ₙ
where G is a polyvalent hydrocarbon group, and/or a heterohydrocarbon group, and/or a siloxane group, comprising from 1 to 100 atoms; each occurrence of Y has been selected independently from a thiosulfonate group, a dithiocarbamate group, a thiocarbonyl group, a mercapto group, a hydrocarbon group, or a sodium thiosulfonate group (Bunte salt group); and each occurrence of the subscript variables a, x and n is an integer for which the following applies independently: a is from 0 to 6; x is from 0 to 8; and n is from 3 to 5.

2. Tire composition according to Claim 1, **characterized in that** the vulcanizing agent comprises a sulfur-containing cyclic structure having the following general formula:
G[CₐH₂ₐ-CH₂-SₓY]ₙ
where G is a polyvalent cyclic hydrocarbylene group, and/or heterohydrocarbylene group, and/or a cyclic siloxane group, comprising from 5 to 8 atoms in the cyclic structure; each Y has been selected independently from a thiosulfonate group, a dithiocarbamate group, a thiocarbonyl group, a mercapto group, a hydrocarbon group, or a sodium thiosulfonate group (Bunte salt group); and each a, x and n is an integer for which the following applies independently: a is from 0 to 6; x is from 0 to 8; and n is from 3 to 5.

3. Tire composition according to Claim 1, **characterized in that** the vulcanizing agent comprises a sulfur-containing cyclic aliphatic hydrocarbon having the following general formula:
G [CₐH₂ₐ-CH₂-SₓY]ₙ
where G is a polyvalent cyclic hydrocarbylene group comprising from 5 to 7 carbon atoms; each Y has been selected independently from a thiosulfonate group, a dithiocarbamate group, a thiocarbonyl group, a mercapto group, a hydrocarbon group, or a sodium thiosulfonate group (Bunte salt group); and each a, x and n is an integer for which the following applies independently: a is from 0 to 6; x is from 0 to 8; and n is from 3 to 5.

4. Tire composition according to Claim 1, **characterized in that** it comprises from 30 to 100 phr of at least one diene rubber.

5. Tire composition according to Claim 1, **characterized in that** further additives encompass plasticizers.

6. Tire composition according to Claim 1, **characterized in that** it comprises from 0.1 to 15 phr of at least one vulcanization accelerator.

7. Tire composition according to Claim 1, **characterized in that** it comprises from 10 to 220 phr of further additives.

8. Tire composition according to Claim 1, **characterized in that** the filler is at least one amorphous silica.

9. Tire composition according to Claim 1, **characterized in that** the filler comprises amorphous silica and carbon black.

10. Tire composition according to Claim 1, **characterized in that** the filler is at least one carbon black.

11. Use of the tire composition according to Claim 1 for producing a tire.

12. Use of the tire composition according to Claim 11 for production of the tread or of an interior component of a tire.

## Revendications

1. Composition de pneus présentant une dureté Shore A selon DIN 53 505 et ASTM D2240 non inférieure à 40 et non supérieure à 95, et une température de transition vitreuse Tg (E"max), selon DIN 53 513 avec un balayage de température spécifié de -80 °C à +80 °C et un compactage spécifié de 10 + 0,2 % à 10 Hz, non inférieure à -80 °C et non supérieure à 0 °C, **caractérisée en ce qu'**elle contient :
- au moins un caoutchouc diène vulcanisable choisi parmi les caoutchoucs naturels, les caoutchoucs de polyisoprène synthétiques, les caoutchoucs de polyisobutylène, les caoutchoucs de polybutadiène et les caoutchoucs de styrène-butadiène ;
- 35 à 300 pce d'au moins une charge active, choisie parmi les noirs de carbone, les silices, les charges à base de silicium et les oxydes métalliques, dont au moins 10 pce doivent être un noir de carbone, une silice ou une combinaison de ceux-ci ;
- 0 à 250 pce d'autres additifs ou d'additifs supplémentaires ;
- 0,1·10⁻³ à 42·10⁻³ mce (moles pour cent parties d'élastomère) d'un agent de vulcanisation, qui réticule avec une fonctionnalité supérieure à 4 ; et
- 0,1 à 20 pce d'au moins un accélérateur de vulcanisation ;
l'agent de vulcanisation contenant des structures de type chimique hydrocarbures ou hétérohydrocarbures ou siloxanes et contenant une structure contenant du soufre de la formule générale suivante :
G[CₐH₂ₐ-CH₂-SₓY]ₙ
G étant un groupe hydrocarboné polyvalent et/ou un groupe hétérohydrocarboné et/ou un groupe siloxane, qui contient 1 à 100 atomes ; chaque occurrence de Y étant choisie indépendamment parmi un groupe thiosulfonate, un groupe dithiocarbamate, un groupe thiocarbonyle, un groupe mercapto, un groupe hydrocarboné et un groupe thiosulfonate de sodium (groupe sel de Bunt) ; et chaque occurrence des variables en indice a, x et n étant des nombres entiers pour lesquels, indépendamment : a vaut 0 à 6 ; x vaut 0 à 8 ; et n vaut 3 à 5.

2. Composition de pneus selon la revendication 1, **caractérisée en ce que** l'agent de vulcanisation contient une structure cyclique contenant du soufre de la formule générale suivante :
G [CₐH₂ₐ-CH₂-SₓY]ₙ
G étant un groupe hydrocarbylène cyclique polyvalent et/ou un groupe hétérohydrocarbylène et/ou un groupe siloxane cyclique, qui contient 5 à 8 atomes dans la structure cyclique ; chaque Y étant choisi indépendamment parmi un groupe thiosulfonate, un groupe dithiocarbamate, un groupe thiocarbonyle, un groupe mercapto, un groupe hydrocarbure et un groupe thiosulfonate de sodium (groupe sel de Bunt) ; et chaque a, x et n étant des nombres entiers pour lesquels, indépendamment : a vaut 0 à 6 ; x vaut 0 à 8 ; et n vaut 3 à 5.

3. Composition de pneus selon la revendication 1, **caractérisée en ce que** l'agent de vulcanisation contient un hydrocarbure aliphatique cyclique contenant du soufre de la formule générale suivants :
G [CₐH₂a-CH₂SₓY]ₙ
G étant un groupe hydrocarbylène cyclique polyvalent qui contient 5 à 7 atomes de carbone ; chaque Y étant choisi indépendamment parmi un groupe thiosulfonate, un groupe dithiocarbamate, un groupe thiocarbonyle, un groupe mercapto, un groupe hydrocarbure et un groupe thiosulfonate de sodium (groupe sel de Bunt) ; et chaque a, x et n étant des nombres entiers pour lesquels, indépendamment : a vaut 0 à 6 ; x vaut 0 à 8 ; et n vaut 3 à 5.

4. Composition de pneus selon la revendication 1, **caractérisée en ce qu'**elle contient 30 à 100 pce d'au moins un caoutchouc diène.

5. Composition de pneus selon la revendication 1, **caractérisée en ce que** les additifs supplémentaires comprennent des plastifiants.

6. Composition de pneus selon la revendication 1, **caractérisée en ce qu'**elle contient 0,1 à 15 pce d'au moins un accélérateur de vulcanisation.

7. Composition de pneus selon la revendication 1, **caractérisée en ce qu'**elle contient 10 à 220 pce d'additifs supplémentaires.

8. Composition de pneus selon la revendication 1, **caractérisée en ce que** la charge est au moins une silice amorphe.

9. Composition de pneus selon la revendication 1, **caractérisée en ce que** la charge contient une silice amorphe et un noir de carbone.

10. Composition de pneus selon la revendication 1, **caractérisée en ce que** la charge est au moins un noir de carbone.

11. Utilisation de la composition de pneus selon la revendication 1 pour la fabrication d'un pneu.

12. Utilisation de la composition de pneus selon la revendication 11 pour la fabrication de la bande de roulement ou d'un élément intérieur d'un pneu.
